# EUROPEAN PATENT SPECIFICATION

(11) **EP 1 768 487 B1**
(45) Date of publication and mention of the grant of the patent: **05.05.2010**
(21) Application number: 05752718.6
(22) Date of filing: 22.06.2005
(51) Int. Cl.: A01L 3/00

(54) **HORSE BOOT PROTECTOR**
HUFSCHUHSCHUTZ
PROTECTEUR DE BOTTES DE CHEVAL

(30) Priority: 24.06.2004 SE 0401643
(43) Date of publication of application: 04.04.2007
(73) Proprietor: G Boots Sweden AB, 266 94 Munka Ljungby (SE)
(72) Inventor: ERIKSSON, Lena, S-437 91 Lindome (SE); GERDARSSON, Gylfi, S-437 91 Lindome (SE)
(74) Representative: Cederbom, Hans Erik August
(86) International application number: PCT/SE2005/000978
(87) International publication number: WO 2006/001764

(56) References cited:
- US-A- 3 520 107
- US-A- 4 174 754
- US-B1- 6 662 537

## Description

The present invention relates to a hoof protector for horses and comprises a sling-like protective part extending around a hoof, which exhibits coupling means for the detachable attachment of the ends of the aforementioned protective part.

### Background art

In conjunction with the performance of a number of equestrian sports, such as flat racing, harness racing (trotting), dressage, show-jumping, etc., it often happens that the horse's hooves on the rear legs strike the front legs immediately above the hooves of the front legs. So-called horse boots, that is to say a kick protector on the rear of the front hooves, are fitted for this reason.

Such so-called boots are available on the market today and are often made from a carcass of leather or a similar material, with a softer foam plastic material or a rubber covering attached to one side of the carcass. The boot is attached around the hoof with a belt and a clasp that is stitched to the carcass.
Previously disclosed solutions suffer from the following disadvantages, however:
I. The material is brittle, and the boot falls apart after being used only a few times.
II. The boot is made for the right and left hoof, which means that it is necessary to purchase two new boots if one has fallen apart.
III. It is not possible to purchase a spare part, for example a clasp, and to effect a repair. The entire boot must be replaced and, moreover, in pairs in accordance with Point II above.
IV. Water is absorbed. There is a maximum weight for competition use. This may be exceeded if the boot becomes too wet and heavier as a result.
V. The boot becomes detached easily when used in open terrain and rides up on the horse's legs.
VI. Because the boot is a flat sheet of leather with a stuffing and must accordingly be bent around the hoof, very tight lacing is required to ensure that it sits securely.
VII. The price for a pair normally varies between SEK 900 and 700. Even dearer variants exist, although these are regarded as expensive in view of the short service life.

Other solutions for boots are also available, such as US 3,703,209 A; US 5,661,958 A; US 4,174,754 A; US 5,715,661 A, and US 3,520,107 A.

The aforementioned, previously disclosed boots are provided, however, with a bottom resembling a sock, which forms the base for the horse's hoof against the ground. The boot wears rapidly in this case, and there is also a risk of the boot slipping on a smooth base.

The principal object of the present invention is thus, in the first instance, among other things to solve the aforementioned problems by simple, effective and reliable means with a boot which consists of a durable material, and which affords the possibility of replacing worn/broken parts if the need arises, and which sits comfortably on the hoof with the attachment arranged in a readily accessible fashion and in such a way that it does not damage the front legs and hooves of the horse.

The aforementioned object is achieved by means of a hoof protector in accordance with the present invention, which is characterized essentially in that the protective part is formed by a C-shaped cover of plastic and/or rubber material open in a downward direction, in that a number of accommodating channels extend along the aforementioned protective part for the purpose of accommodating a wire therein, in that the aforementioned wire is preferably plastic-coated, and in that a clamping mechanism for the aforementioned number of wires is so arranged as to be accommodated between both ends of the protective part at the front of an aforementioned horse's hoof.

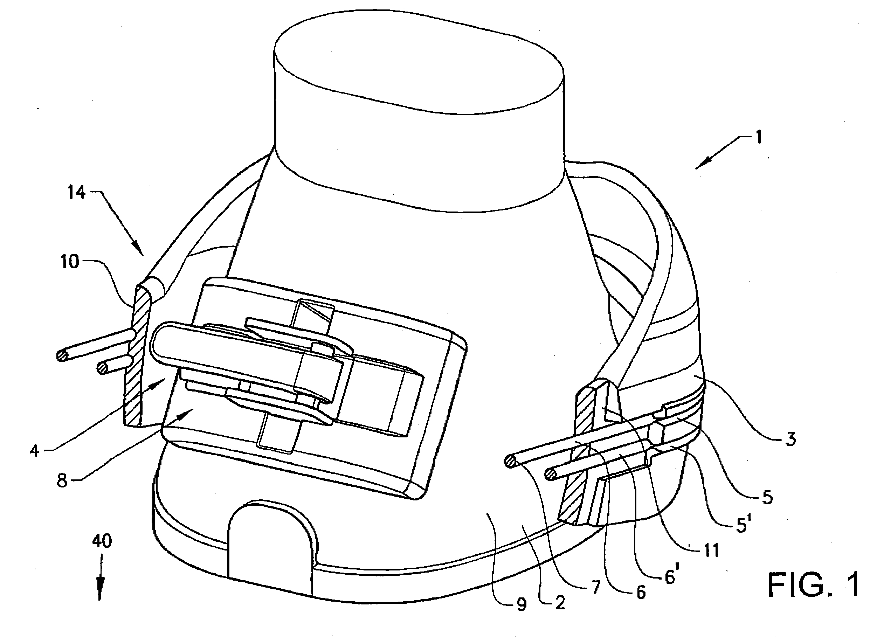

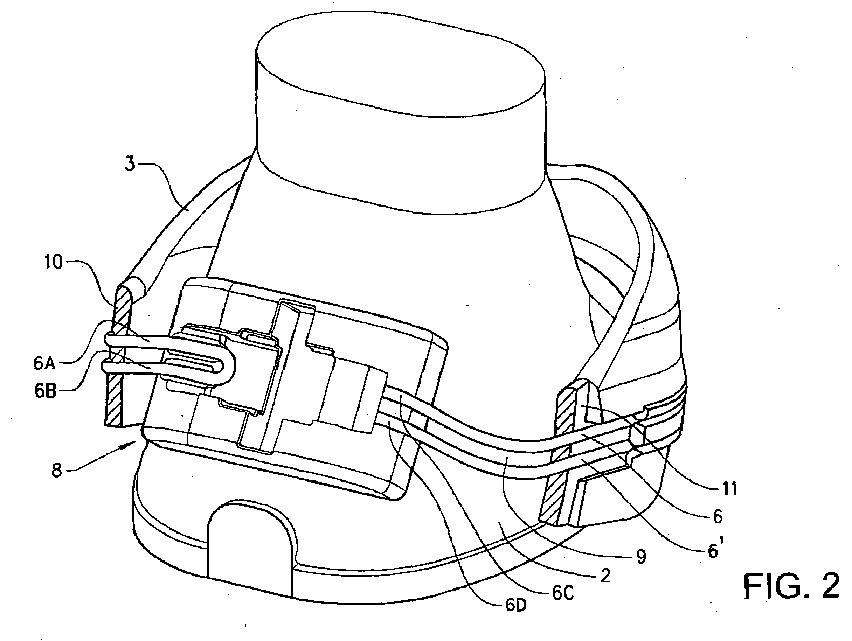

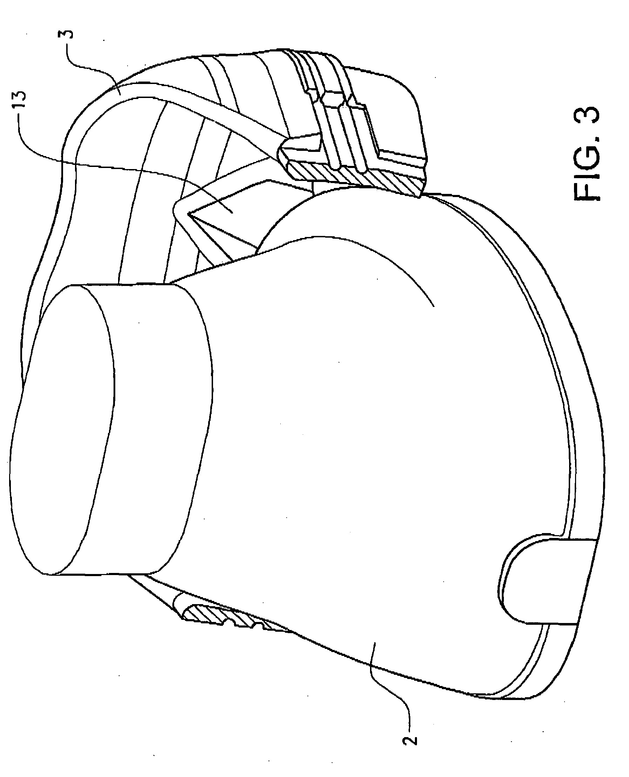

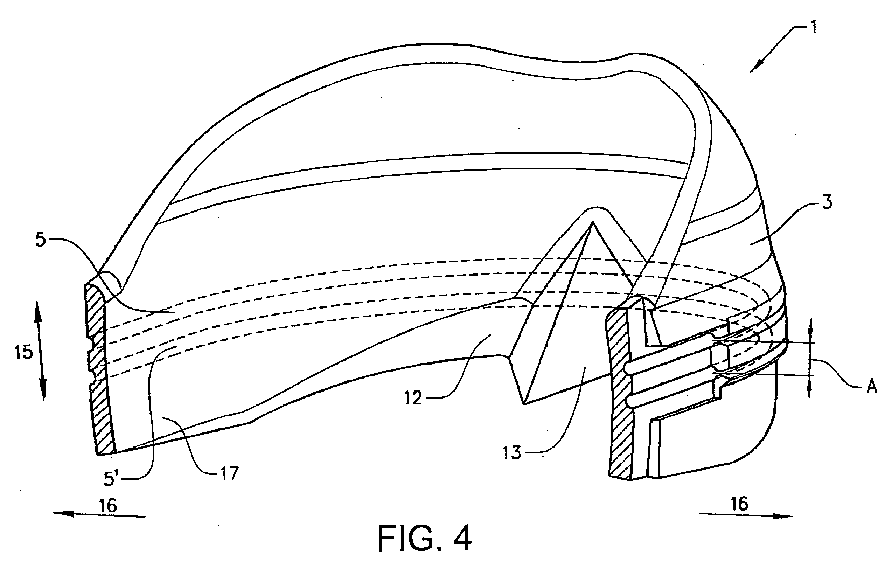

The invention is described below as a preferred illustrative embodiment of a hoof protector, in conjunction with which reference is made to the accompanying drawings, in which
Fig. 1 - Fig. 4 show perspective views of a hoof protector in accordance with the invention and arranged in different positions on a hoof;

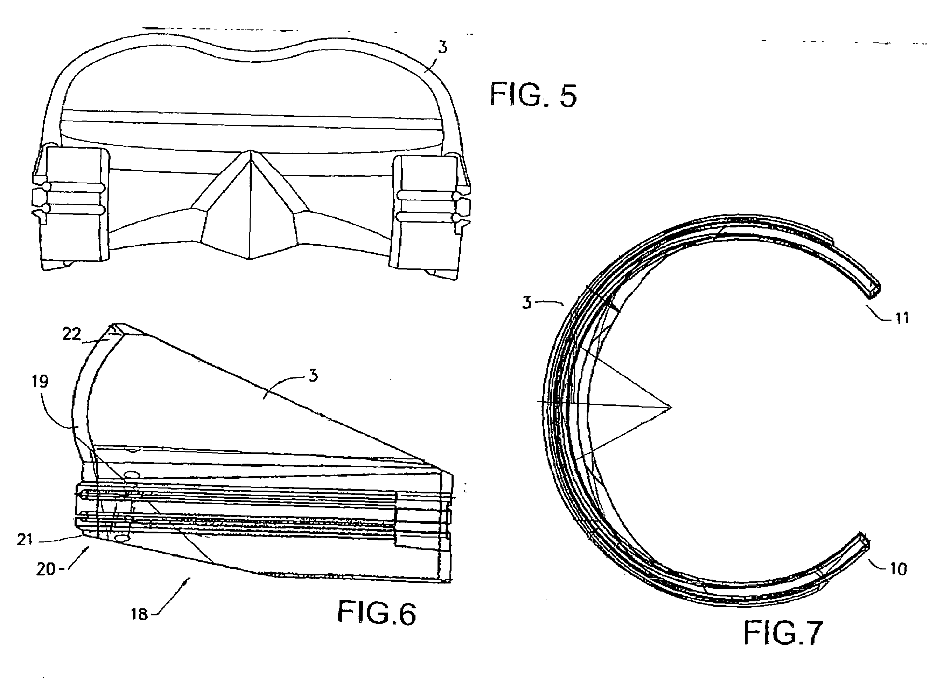

Fig. 5 - Fig. 7 show the aforementioned hoof protector viewed from different directions;

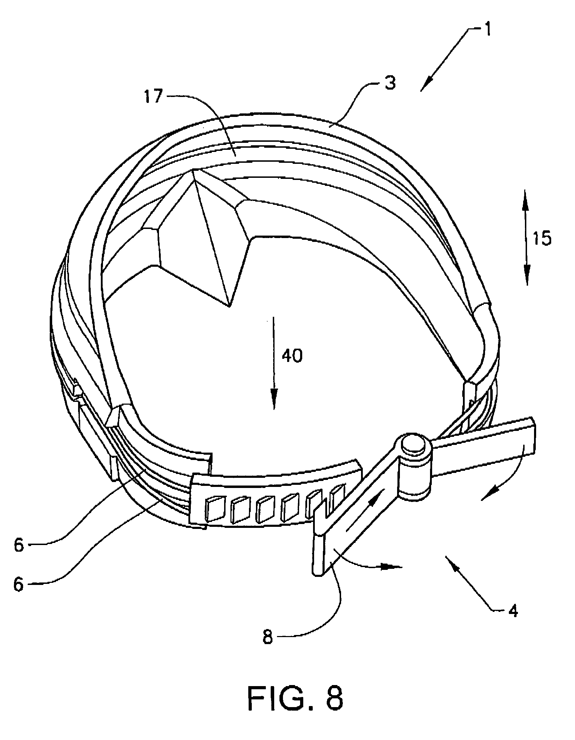

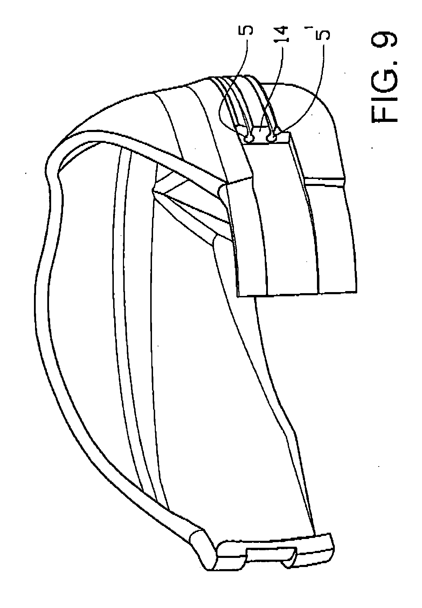

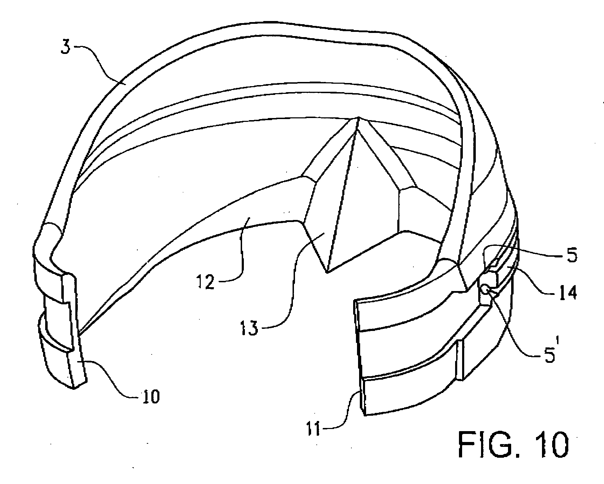

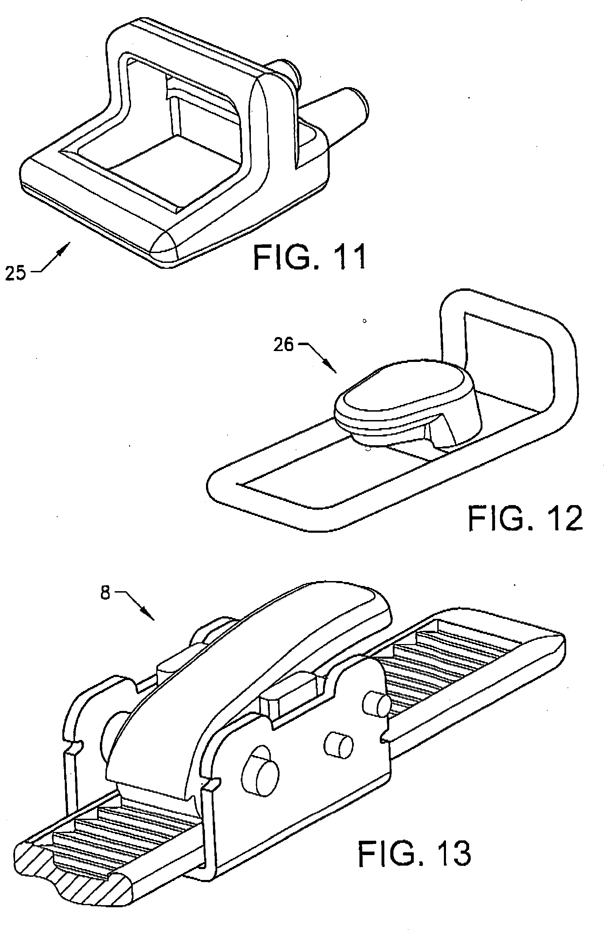

Fig. 8 - Fig. 11 show the hoof protector from the complete secured position to a perspective view viewed from the front;
Fig. 12 - Fig. 13 show the wire end and a clamping mechanism;
Fig. 14 shows a side view of the hoof protector;

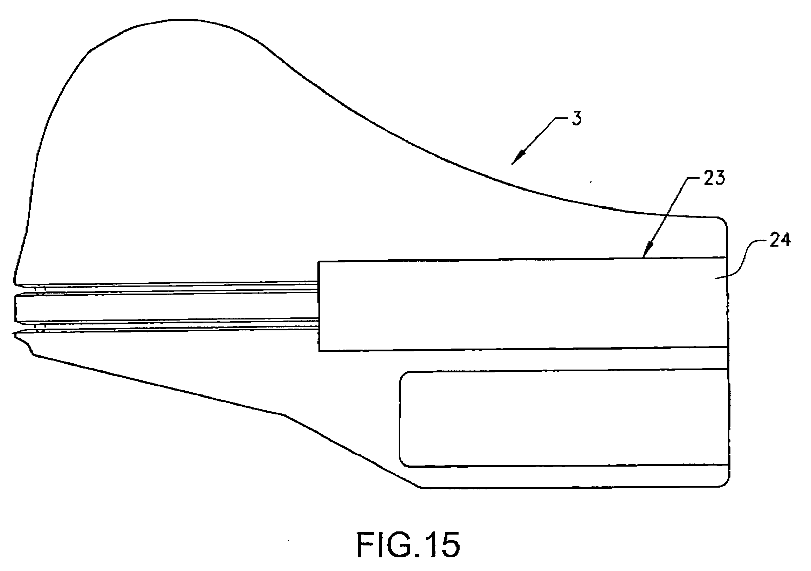

Fig. 15 shows a side view of an alternative hoof protector.

A hoof protector 1, which is intended to be used on horses on the rear of the front hooves 2 in order to prevent the rear hooves of the horse from damaging the front legs just above the hooves of the front legs in the event that the rear hooves strike the front legs, comprises a sling-like protective part 3 extending around a hoof 2, which part exhibits coupling means 4 for the detachable attachment of the ends of the aforementioned protective part 3.

In accordance with the invention, the aforementioned protective part 3 comprises a C-shaped cover made of a material consisting of plastic and/or rubber and open in a downward direction. A suitable material is Santoprene or polyurethane rubber, and a suitable Shore value for the material is in the order of 60-70. For the purpose of securing the hoof protector 1 around the hoof 2 of a horse, a number of accommodating channels 5, 5¹, each intended to accommodate its own wire 6, 6¹ therein, extends around the aforementioned protective part 3, which wire, which preferably consists of metal material and is preferably coated with a layer 7 of plastic, is enclosed in such a way as to be protected from access from outside in the aforementioned associated channel. The wire can also be entirely enclosed in the material of the protector, i.e. moulded therein. A clamping mechanism 8 arranged for tightening of the aforementioned wires 6, 6¹ is so arranged as to be accommodated at the front of an aforementioned horse hoof 2 inside the space 9 that is formed between both of the respective free ends 10, 11 of the protective part.

Clamping mechanisms other than that illustrated in the drawings can be used. For example, a strap consisting of reinforced rubber and/or plastic material with a detachable clasp can be used to enable the aforementioned protective part 3 to be tightened so that it sits firmly and securely on the horse's hoof and protects it against kicks from behind. The clasp in this case maybe of a previously disclosed kind, which exhibits a pivoting pin that is inserted into a suitable hole on the strap after the desired tightening of the strap between both free ends 10, 11 of the protective part. The aforementioned strap is attached to the wire via a coupling part attached in a fixed and/or articulated fashion, which means that at least one end of the wire can be so arranged as to move to the desired set position.

The aforementioned protective part 3 is preferably formed from material in accordance with the foregoing. Silicon rubber is also a very suitable material for the aforementioned purpose. This is a wear-resistant material and is intended to be capable of lasting for at least one year in the case of the Icelandic horses which compete internationally, and the material also does not absorb water and retains its weight even if it becomes wet.

The material also permits the protective part to exhibit from the outset the form that the protection must have when it is sitting securely around the hoof of a horse.

In order further to improve securing of the hoof protection 1 on a horse, so that it does not work loose and slide up the leg of the horse, the protective part 3 exhibits in its central area a fold 12 that is so arranged as to extend in beneath the horse's hoof and to be accommodated in a space formed between the horse's shoe and the aforementioned hoof. Also present in the aforementioned fold is a thickened area 13, which is so arranged as to be accommodated in a recess, or frog, situated at the bottom in the rear part of the horse's hoof 2 in question.

The aforementioned accommodating channels 5, 5¹ for the wires 6, 6¹ in question are so arranged as to extend in a lateral thickened area 14 extending along the periphery of the aforementioned protective part, which thickened area is formed as a common unit with the aforementioned protective part 3. At least pairs of channels 5, 5¹ extend along the periphery of the aforementioned protective part at a mutual distance A from one another, viewed in the vertical sense 15 of the protective part. The one or more aforementioned channels 5, 5¹ is/are open appropriately in a direction extending laterally 16 outwards from the inward-facing part 17 of the protective part that is so arranged as to make contact with and extend along the periphery of the hoof 2 in question of the horse.

The lower accommodating channel 5¹ for the associated wire 6¹ is situated close to the lower part of the protective part, which causes the rear edge of the protective part 3 to be forced down under the hoof and effectively holds it securely in this way.

The protective part 3 exhibits a peripheral edge 18 at the bottom, which reduces in height towards the rearward-facing part 19 of the protective part, approximately from the central part of the protective part and appropriately inclined in a uniform manner so that a wedge-shaped recess 20 is formed in the protective part 3 in order to match more closely the form of the horse's hoof at the bottom and at the rear.

The protective part 3 is inclined at the top from its lower front edge 21 and up to a significantly higher level at its rear, higher back edge 22, preferably with a uniform incline, so that the protection exhibits a high and effective protective surface on its rearward-facing part of the protection. The protective cover formed in this way is arched in a direction outwards from its centrally situated inner space.

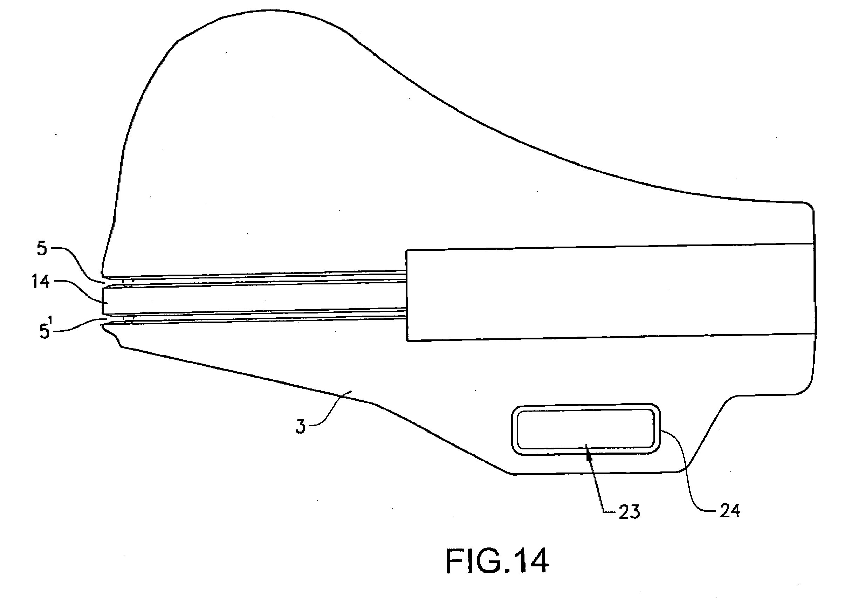

Fig. 14 in the drawings, for example, provides an illustration of how a weight 23 can be placed in an accommodating pocket 24 for the weight 23 on the lower, front, outer part of the protective part. Such weights help the horse to have a longer or shorter stride, for example in competition. Such weights are appropriately so arranged as to be capable of being removed and replaced with other weights, which weigh more or less.

The aforementioned clamping mechanism 8 is in the form of a clasp, which is so arranged as to be positioned at the front of the horse's hoof and attached to the respective ends of the aforementioned wires in the space 9 formed between the respective ends 10, 11 of the protective part 3. The clasp preferably exhibits an over-centre function in order to be retained securely in the locked, engaged position.

Connection of the ends 6A, 6B, 6C, 6D of the wires to the locking mechanism 8 can be facilitated if the wires 6, 6¹ are attached to end connectors 25, 26 made of plastic or metal and which are so arranged as to be capable of being connected together with the aforementioned clamping mechanism 8. Thanks to the fact that the clamping mechanism 8 is so arranged as to be positioned at the front of a horse's hoof, the same "boot" can be fitted at will to the right or the left hoof, and it is thus possible in this way to replace a damaged boot, for example, instead of, as previously, being required to purchase two new boots if one boot falls apart.

It is now also possible to replace parts easily as required, for example if any part falls apart, without, as previously, having to replace the entire boot. The new boot is, in fact, formed by three separate parts, each of which can be replaced independently of one another and exchanged for a replacement part, namely the protector itself, the wire and the clasp.

The aforementioned protector is also more attractive for horse owners from a price point of view.

The boot is easy to apply to a hoof by pushing it onto the hoof from the rear, preferably after having first pressed apart the ends of the same. The clamping mechanism 8 is then easily tensioned so that the wires 6, 6¹ are tightened around the boot 1 and press against it uniformly around the hoof 2. The desired tightening is preferably so arranged in this case as to be capable of being effected by selecting the right clamping of the clamping mechanism 8. Release and removal thus take place in the opposite sequence to the above.

The invention is naturally not restricted to the embodiments described above and illustrated in the accompanying drawings. Modifications are possible, in particular with regard to the nature of the various parts, or by the use of equivalent technology, but without departing from the area of protection afforded to the invention, as defined in the Patent Claims. The hoof protector may, for example, exhibit a height such that the desired extent of the horse's leg is protected effectively and securely against kicks from behind.

## Claims

1. A hoof protector (1) for horses comprising a sling-like protective part (3) extending around a hoof (2), which exhibits coupling means (4) for the detachable attachment of ends (10, 11) of the aforementioned protective part, and the protective part (3) is formed by a C-shaped cover of plastic and/or rubber material open in a downward direction (40), **characterized in that** a number of accommodating channels (5, 5¹) extend along the aforementioned protective part (3) accommodating a wire (6, 6¹) therein, **in that** the aforementioned channel/s (5, 5¹) is/are open in a direction outwards (16) from the inward-facing part (17) of the protective part, or **in that** the aforementioned channel/s extends/extend internally into the protective part along the periphery of the same, **in that** the aforementioned wire, which preferably consists of metal material and is preferably coated with a layer (7) of plastic, is partially or entirely enclosed protected from access from outside in the aforementioned associated channel, and **in that** the coupling means is a clamping mechanism (8)
for the aforementioned number of wires (6, 6¹) so arranged as to be accommodated between both ends (10, 11) of the protective part at the front of an aforementioned horse's hoof (2).

2. A hoof protector as claimed in Claim 1, **characterized in that** the protective part (3) is formed from silicon rubber, polyurethane, Santoprene® or a material having characteristics similar to those exhibited by these aforementioned materials.

3. A hoof protector as claimed in one or other of the foregoing Claims, **characterized in that** the protective part (3) exhibits in its central area a fold (12) that extends in beneath the horse's hoof and is so arranged as to be accommodated in a space formed between the horse's shoe and the aforementioned hoof.

4. A hoof protector as claimed in Claim 3, **characterized in that** a thickened area (13) in the aforementioned fold is so arranged as to be accommodated in a recess at the bottom in the rear part of the horse's hoof (2) in question.

5. A hoof protector as claimed in one or other of the foregoing Claims, **characterized in that** the accommodating channels (5, 5¹) for the wires (6, 6¹) in question extend in a lateral thickened area (14) extending along the periphery of the aforementioned protective part.

6. A hoof protector as claimed in Claim 5, **characterized in that** pairs of channels (5, 5¹) extend along the periphery of the aforementioned protective part at a mutual distance (A) from one another, viewed in the vertical sense (15) of the protective part.

7. A hoof protector as claimed in one or other of the foregoing Claims, **characterized in that** the protective part (3) exhibits a peripheral edge (18) at the bottom, which reduces in height towards the rearward-facing part of the protective part, approximately from the central part of the protective part.

8. A hoof protector as claimed in one or other of the foregoing Claims, **characterized in that** the clamping mechanism (8) is in the form of a clasp, which exhibits an over-centre function or a strap.

9. A hoof protector as claimed in one or other of the foregoing Claims, **characterized in that** the ends (6A-6D) of the wires (6, 6¹) are attached to end connectors made of plastic or metal and which are so arranged as to be capable of being connected together with the aforementioned clamping mechanism (8).

10. A hoof protector (1) as claimed in claim 1, **characterized in that** the clamping mechanism for the aforementioned number of wires (6, 6¹) comprises a strap consisting of reinforced rubber and/or plastic material with a detachable clasp to enable the aforementioned protective part (3) to be tightened so that it sits firmly and securely on the horse's hoof and protects it against kicks from behind and that the clasp is of a previously disclosed kind, which exhibits a pivoting pin that is inserted into a suitable hole on the strap after the desired tightening of the strap between both free ends (10, 11) of the protective part, and which aforementioned strap is attached to the wire via a coupling part attached in a fixed and/or articulated fashion.

11. A hoof protector (1) as claimed in Claim 1, **characterized in that**, a lower accommodating channel (5¹) for the associated wire (6¹) is situated close to the lower part of the protective part, which causes the rear edge of the protective part (3) to be forced down under the hoof and effectively holds it securely in this way.

12. A hoof protector (1) as claimed in Claim 11, **characterized in that**, the protective part (3) exhibits a peripheral edge (18) at the bottom, which reduces in height towards the rearward-facing part (19) of the protective part, approximately from the central part of the protective part and appropriately inclined in a uniform manner so that a wedge-shaped recess (20) is formed in the protective part (3) in order to match more closely the form of the horse's hoof at the bottom and at the rear.

## Patentansprüche

1. Hufschutzeinrichtung (1) für Pferde, mit einem schlingenartigen Schutzteil (3), das sich um einen Huf (2) erstreckt und ein Kopplungsmittel (4) für die lösbare Befestigung von Enden (10, 11) des Schutzteils aufweist, und wobei das Schutzteil (3) durch eine C-förmige Abdeckung aus Kunststoff- und/oder Gummimaterial geformt ist, die in einer Abwärtsrichtung (40) offen ist,
**dadurch gekennzeichnet, dass**
sich eine Anzahl von Aufnahmekanälen (5, 5¹) entlang des Schutzteils (3) erstreckt, die einen Draht (6, 6¹) darin aufnehmen, dass der/die Kanal/Kanäle (5, 5¹) in einer Richtung auswärts (16) von dem einwärts weisenden Teil (17) des Schutzteiles offen ist/ sind oder dass sich der/die Kanal/Kanäle innerhalb in das Schutzteil entlang des Umfangs desselben erstreckt/erstrecken, dass der Draht, der bevorzugt aus Metallmaterial besteht und bevorzugt mit einer Kunststoffschicht (7) beschichtet ist, teilweise oder vollständig umschlossen und vor einem Zugang von außerhalb in dem zugeordneten Kanal geschützt ist, und dass das Kopplungsmittel ein Klemmmechanismus (8) für die Anzahl von Drähten (6, 6¹) ist, der derart angeordnet ist, dass er zwischen beiden Enden (10, 11) des Schutzteils an der Vorderseite eines Pferdehufs (2) aufgenommen ist.

2. Hufschutzeinrichtung nach Anspruch 1,
**dadurch gekennzeichnet, dass**
das Schutzteil (3) aus Silikongummi, Polyurethan, Santoprene® oder einem Material mit Charakteristiken geformt ist, die ähnlich denen sind, die diese vorher erwähnten Materialien aufweisen.

3. Hufschutzeinrichtung nach einem der vorhergehenden Ansprüche,
**dadurch gekennzeichnet, dass**
das Schutzteil (3) in seinem zentralen Bereich eine Faltung (12) aufweist, die sich unterhalb des Pferdehufs erstreckt und derart angeordnet ist, dass sie in einem Raum aufgenommen ist, der zwischen dem Pferdeschuh und dem Huf geformt ist.

4. Hufschutzeinrichtung nach Anspruch 3,
**dadurch gekennzeichnet, dass**
ein verdickter Bereich (13) in der Faltung derart angeordnet ist, dass er in einer Ausnehmung an dem unteren Bereich in dem rückwärtigen Teil des betreffenden Pferdehufs (2) aufgenommen ist.

5. Hufschutzeinrichtung nach einem der vorhergehenden Ansprüche,
**dadurch gekennzeichnet, dass**
die Aufnahmekanäle (5, 5¹) für die betreffenden Drähte (6, 6¹) sich in einem seitlichen verdickten Bereich (14) erstrecken, der sich entlang des Umfangs des Schutzteiles erstreckt.

6. Hufschutzeinrichtung nach Anspruch 5,
**dadurch gekennzeichnet, dass**
sich Paare von Kanälen (5, 5¹) entlang des Umfangs des Schutzteiles unter einer gegen seitigen Distanz (A) voneinander bei Betrachtung im vertikalen Sinn (15) des Schutzteils erstrecken.

7. Hufschutzeinrichtung nach einem der vorhergehenden Ansprüche,
**dadurch gekennzeichnet, dass**
das Schutzteil (3) einen Umfangsrand (18) an dem Boden aufweist, dessen Höhe sich in Richtung des nach rückwärts weisenden Teils des Schutzteils ungefähr von dem Zentralteil des Schutzteils reduziert.

8. Hufschutzeinrichtung nach einem der vorhergehenden Ansprüche,
**dadurch gekennzeichnet, dass**
der Klemmmechanismus (8) in der Form einer Schließe vorliegt, die eine Übertotpunktfunktion oder einen Riemen aufweist.

9. Hufschutzeinrichtung nach einem der vorhergehenden Ansprüche,
**dadurch gekennzeichnet, dass**
die Enden (6A - 6D) der Drähte (6, 6¹) an Endverbindern befestigt sind, die aus Kunststoff oder Metall bestehen und die derart angeordnet sind, dass sie in der Lage sind, mit dem Klemmmechanismus miteinander verbunden zu werden.

10. Hufschutzeinrichtung (1) nach Anspruch 1,
**dadurch gekennzeichnet, dass**
der Klemmmechanismus für die Anzahl von Drähten (6, 6¹) einen Riemen, der aus verstärktem Gummi- und/oder Kunststoffmaterial besteht, mit einer lösbaren Schließe umfasst, um zu ermöglichen, dass das Schutzteil (3) festgezogen werden kann, so dass es fest und sicher an dem Pferdehuf sitzt und diesen gegenüber Stößen von hinten schützt, und dass die Schließe von einem vorher offenbarten Typ ist, der einen Schwenkstift aufweist, der in ein geeignetes Loch an dem Riemen nach dem gewünschten Festziehen des Riemens zwischen beiden freien Enden (10, 11) des Schutzteils eingesetzt ist, und wobei der Riemen an dem Draht über ein Kopplungsteil befestigt ist, das in einer fixierten und/oder gelenkigen Art und Weise befestigt ist.

11. Hufschutzeinrichtung (1) nach Anspruch 1,
**dadurch gekennzeichnet, dass**
ein unterer Aufnahmekanal (5¹) für den zugeordneten Draht (6¹) nahe dem unteren Teil des Schutzteiles angeordnet ist, was zur Folge hat, dass der rückwärtige Rand des Schutzteils (3) unter den Huf getrieben wird und diesen auf diese Weise sicher und effektiv hält.

12. Hufschutzeinrichtung (1) nach Anspruch 11,
**dadurch gekennzeichnet, dass**
das Schutzteil (3) einen Umfangsrand (18) an dem Boden aufweist, dessen Höhe sich in Richtung des nach rückwärts weisenden Teils (19) des Schutzteils ungefähr von dem Zentralteil des Schutzteils und geeignet schräg gestellt auf eine gleichförmige Weise reduziert, so dass eine keilförmige Ausnehmung (20) in dem Schutzteil (3) geformt ist, um die Form des Pferdehufs an dem Boden und an der Rückseite enger anzupassen.

## Revendications

1. Protège-sabot (1) pour chevaux comportant une partie protectrice (3) de type à bride entourant un sabot (2), qui présente des moyens d'accouplement (4) pour la fixation amovible des extrémités (10, 11) de la partie protectrice susmentionnée, et dans lequel la partie protectrice (3) est constituée par une couverture en matière plastique et/ou en caoutchouc conformée en C et ouverte vers le bas (40), **caractérisé en ce que** plusieurs canaux récepteurs (5, 5¹) s'étendent le long de la partie protectrice susmentionnée (3) et reçoivent un fil (6, 6¹), **en ce que** le canal ou les canaux susmentionné(s) (5, 5¹) est/sont ouvert(s) vers l'extérieur (16) à partir de la partie orientée vers l'intérieur (17) de la partie protectrice, ou **en ce que** le canal ou les canaux susmentionné(s) s'étend(ent) à l'intérieur de la partie protectrice sur le pourtour de celle-ci, **en ce que** le fil susmentionné, qui est de préférence en matière métallique et de préférence revêtu d'une couche (7) de plastique, est partiellement ou entièrement enfermé, protégé dans le canal associé susmentionné contre l'accès de l'extérieur, et **en ce que** les moyens d'accouplement consistent en un mécanisme de serrage (8) pour la pluralité de fils (6, 6¹) susmentionnés prévu pour être logé entre les deux extrémités (10, 11) de la partie protectrice à l'avant du sabot (2) susmentionné de cheval.

2. Protège-sabot selon la revendication 1, **caractérisé en ce que** la partie protectrice (3) est réalisée en caoutchouc de silicone, en polyuréthane, en Santoprene® ou en une matière présentant des caractéristiques similaires à celles des matières susmentionnées.

3. Protège-sabot selon l'une quelconque des revendications précédentes, **caractérisé en ce que** la partie protectrice (3) présente un pli (12) dans sa zone centrale qui s'étend sous le sabot du cheval et est prévu pour être logé dans un espace formé entre le fer à cheval et le sabot susmentionné.

4. Protège-sabot selon la revendication 3, **caractérisé en ce qu'**une zone épaissie (13) dans le pli susmentionné est prévue pour être logée dans une cavité au niveau de la partie inférieure dans la partie arrière du sabot du cheval (2) en question.

5. Protège-sabot selon l'une quelconque des revendications précédentes, **caractérisé en ce que** les canaux récepteurs (5, 5') pour les fils (6, 6') en question s'étendent dans un secteur latéral épaissi (14) s'étendant le long de la périphérie de la partie protectrice susmentionnée.

6. Protège-sabot selon la revendication 5, **caractérisé en ce que** des paires de canaux récepteurs (5, 5¹) s'étendent le long du pourtour de la partie protectrice susmentionnée à une distance mutuelle (A) les uns des autres, vus dans le sens vertical (15) de la partie protectrice.

7. Protège-sabot selon l'une quelconque des revendications précédentes, **caractérisé en ce que** la partie protectrice (3) présente un rebord périmétrique (18) au niveau de la partie inférieure, qui diminue en hauteur vers la partie orientée vers l'arrière de la partie protectrice, approximativement à partir de la partie centrale de la partie protectrice.

8. Protège-sabot selon l'une quelconque des revendications précédentes, **caractérisé en ce que** le mécanisme de serrage (8) est réalisé sous la forme d'une agrafe, qui présente une fonction de décentrage ou un lien.

9. Protège-sabot selon l'une quelconque des revendications précédentes, **caractérisé en ce que** les extrémités (6A-6D) des fils (6, 6¹) sont fixées à des connecteurs d'extrémité réalisés en plastique ou en métal et qui sont prévus pour pouvoir être raccordés entre eux et au mécanisme de serrage susmentionné (8).

10. Protège-sabot (1) selon la revendication 1, **caractérisé en ce que** le mécanisme de serrage pour la pluralité de fils (6, 6¹) susmentionnés comporte un lien en matière plastique et/ou en caoutchouc renforcé(e) avec une agrafe détachable permettant à la partie protectrice susmentionnée (3) d'être serrée pour tenir efficacement et solidement sur le sabot du cheval et le protège contre des coups venant de derrière, et **en ce que** l'agrafe est du type précédemment décrit, qui présente un pivot inséré dans un orifice approprié du lien après le serrage souhaité du lien entre les deux extrémités libres (10, 11) de la partie protectrice, et lequel lien susmentionné est attaché au fil par l'intermédiaire d'une pièce d'accouplement reliée de manière fixe et/ou articulée.

11. Protège-sabot (1) selon la revendication 1, **caractérisé en ce qu'**un canal récepteur inférieur (5') pour le fil associé (6') est prévu à proximité de la partie inférieure de la partie protectrice, pour forcer le bord arrière de la partie protectrice (3) vers le bas sous le sabot et le maintenir efficacement et solidement de cette façon.

12. Protège-sabot (1) selon la revendication 11, **caractérisé en ce que**, la partie protectrice (3) présente un rebord périmétrique (18) au niveau de la partie inférieure, qui diminue en hauteur vers la partie orientée vers l'arrière (19) de la partie protectrice, approximativement à partir de la partie centrale de la partie protectrice et convenablement incliné de manière uniforme pour former une cavité conformée en clavette (20) dans la partie protectrice (3) de manière à épouser plus étroitement la forme du sabot du cheval en partie inférieure et à l'arrière.
